# FASCICULE DE BREVET EUROPEEN

(11) **EP 2 790 988 B1**
(45) Date de publication et mention de la délivrance du brevet: **18.10.2017**
(21) Numéro de dépôt: 12799558.7
(22) Date de dépôt: 07.12.2012
(51) Int. Cl.: B60W 10/06, B60W 10/08, B60W 20/00, B60W 30/188, B60W 50/00, B60K 6/20

(54) **PROCEDE DE GESTION D'ENERGIE POUR UN VEHICULE ELECTRIQUE**
ENERGIEVERWALTUNGSVERFAHREN FÜR EIN ELEKTROFAHRZEUG
ENERGY MANAGEMENT METHOD FOR AN ELECTRIC VEHICLE

(30) Priorité: 14.12.2011 FR 1161630
(43) Date de publication de la demande: 22.10.2014
(73) Titulaire: Renault S.A.S., 92100 Boulogne-Billancourt (FR)
(72) Inventeur: GRANATO, Giovanni, F-92170 Vanves (FR); AOUCHICHE, Kamal, F-91440 Bures Sur Yvette (FR); BONNANS, Joseph, Frédéric, F-78180 Montigny Le Bretonneux (FR); ZIDANI, Hasnaa, F-75005 Paris (FR); ROUSSEAU, Grégory, F-92600 Asnieres Sur Seine (FR)
(86) Numéro de dépôt international: PCT/EP2012/074828
(87) Numéro de publication internationale: WO 2013/087536

(56) Documents cités:
- WO-A1-2009/103369
- DE-A1-102008 056 858
- US-A1- 2005 274 553
- US-A1- 2006 278 449
- US-A1- 2008 319 596
- US-A1- 2011 022 255

## Description

L'invention se rapporte à un procédé de gestion d'énergie pour un véhicule électrique. A l'heure actuelle, un véhicule électrique VE présente une autonomie faible par rapport à un véhicule à moteur thermique et à un véhicule hybride. Une solution qui permet d'augmenter l'autonomie du VE est de le doter d'un prolongateur d'autonomie RE, comme range extender. Le RE est une deuxième source d'énergie qui est assimilable à un moteur d'appoint, et qui aide la batterie haute-tension d'un véhicule électrique à tracter ledit véhicule, ladite batterie constituant sa source d'énergie principale. Typiquement, bien que le moteur d'appoint RE puisse être un moteur thermique à carburant ou une pile à combustible, nous supposerons pour la suite de la description, qu'il est représenté par un moteur à carburant. Le moteur d'appoint RE fournit une puissance au moteur électrique, par exemple, à travers un courant électrique dans le réseau haute-tension du VE, mais il n'est pas capable d'assurer à lui tout seul, la traction du véhicule. L'ajout d'un moteur d'appoint RE permet d'augmenter l'énergie globale disponible à bord du véhicule et augmente donc a priori son autonomie kilométrique.

Pour ce type de véhicule électrique doté d'un moteur d'appoint, il est donc nécessaire de développer un procédé de gestion de consommation d'énergie, qui soit le plus rigoureux possible, afin d'optimiser l'utilisation de ce moteur d'appoint, à chacune des phases de roulage de ce véhicule, dans le but d'accroître son autonomie kilométrique.

La demande de brevet US2006/0278449 décrit un procédé permettant de sélectionner les phases d'utilisation d'un moteur thermique d'un véhicule hybride le long d'un trajet donné, de manière à minimiser la consommation de carburant dudit véhicule. Un tel procédé utilise notamment un système de navigation de type GPS.

La demande de brevet US2005/0274553 divulgue un procédé équivalent utilisant certaines informations du véhicule, telles que par exemple une localisation à un instant donné, le temps, une cartographie 3D du réseau routier fournie par un système de navigation et un historique de roulage, pour notamment déclencher des phases de commande actuelles et futures du moteur thermique et de la puissance électrique.

Un procédé de gestion de la consommation d'énergie selon l'invention, permet de gérer de façon optimisée, les phases d'utilisation du moteur d'appoint le long d'un trajet donné, dans le but de limiter le plus possible la consommation en carburant le long dudit trajet. Un tel procédé ne peut être réellement exploitable, que s'il est rigoureux et précis, et nécessite donc une prévision la plus réaliste possible de la vitesse du véhicule sur chaque portion élémentaire dudit trajet. Ce procédé s'appuie notamment sur des scénarios possibles de transition de vitesse sur chacune desdites portions élémentaires, en associant à chaque scénario considéré, une probabilité liée à une multiplicité de paramètres. L'objectif d'un procédé selon l'invention est d'anticiper le plus fidèlement possible, le comportement du véhicule le long d'un trajet donné, afin de détecter les zones dudit trajet pour lesquelles le moteur d'appoint devra être activé, dans l'optique d'accroître au maximum l'autonomie kilométrique dudit véhicule.

L'optimisation de l'utilisation du RE repose sur le fait que la batterie possède un rendement qui est fonction de son état de charge. De façon similaire, le rendement du RE dépend de la puissance qu'il fournit au réseau haute tension du véhicule. Par exemple, dans le cas d'un moteur à combustion, le rendement énergétique qui est défini comme étant le rapport entre l'énergie utile, ou l'énergie transformée en courant pour aider la traction, et l'énergie du carburant consommé, dépend de son régime, c'est-à-dire de sa vitesse de rotation, et du couple qu'il délivre. Un procédé de gestion de la consommation énergétique selon l'invention a donc pour but de déterminer les phases le long d'un trajet pour lesquelles la batterie et le RE sont les plus performants, tout en assurant la puissance nécessaire pour tracter le véhicule, l'objectif demeurant de limiter la consommation du carburant du moteur d'appoint.

L'invention se rapporte à un procédé de gestion de la consommation d'énergie pour un véhicule automobile doté d'une batterie électrique et d'un moteur thermique, ledit procédé permettant de sélectionner les phases d'utilisation dudit moteur le long d'un trajet donné, de manière à minimiser la consommation de carburant dudit véhicule sur ledit trajet. La principale caractéristique d'un procédé selon l'invention est qu'il comprend les étapes suivantes :
- une étape de découpage en plusieurs segments du réseau routier pris en considération pour un trajet donné, chaque segment étant délimité par un noeud d'entrée et un noeud de sortie,
- une étape de calcul de la probabilité d'une transition de vitesse entre une vitesse à un noeud d'entrée et une vitesse à un noeud de sortie d'un segment, à partir d'une vitesse associée audit segment, et en considérant plusieurs vitesses au noeud d'entrée et plusieurs vitesses au noeud de sortie, ladite étape étant réalisée de proche en proche sur tous les segments du trajet,

- une étape d'application d'un algorithme d'optimisation stochastique prenant en compte tous les scénarios possibles de transition entre chaque noeud d'entrée et chaque noeud de sortie le long du trajet, et leur probabilité associée, ainsi qu'un modèle de consommation de carburant entre deux noeuds successifs, et qui est fonction de la vitesse dudit véhicule entre lesdits noeuds et de l'état de charge de la batterie,
- une étape de sélection des phases d'utilisation du moteur thermique le long du trajet.

Un procédé selon l'invention a pour objet de déterminer un scénario de comportement d'un véhicule électrique le long d'un trajet donné, essentiellement en termes de vitesse, qui soit le plus probable possible afin de déterminer les portions de trajet pour lesquelles le moteur d'appoint doit être activé. Ce scénario est élaboré en faisant l'hypothèse que la consommation de carburant par le moteur d'appoint doit être minimale le long du trajet considéré. Pour un trajet donné, le réseau routier est découpé en segments, et le procédé de gestion selon l'invention passe en revue tous les scénarios possibles de transition de vitesse entre le début et la fin de chaque segment, en s'appuyant sur une vitesse règlementaire le long de chaque segment et en balayant toutes les vitesses possibles à l'entrée et à la sortie de chaque segment. De cette manière, une probabilité est associée à toute transition de vitesse envisagée entre l'entrée et la sortie de chaque segment. Le procédé de gestion selon l'invention, opère de proche en proche, segment après segment, pour obtenir un scénario final de comportement du véhicule le long du trajet, qui sera le plus proche possible du trajet qui sera réellement effectué par le véhicule. Le découpage du trajet en segments peut s'effectuer, soit de façon automatique par l'intermédiaire d'un navigateur de type GPS, soit de façon manuelle en se focalisant sur les portions du trajet dans lesquelles la vitesse du véhicule risque de varier avec une grande amplitude et de façon fréquente. Le moteur d'appoint constitue une aide à la batterie pour activer le moteur électrique, afin de soulager ladite batterie lors de certaines phases de roulage du véhicule. Ce moteur peut, par exemple, être constitué par un moteur à carburant ou par une pile à combustible. Un procédé selon l'invention s'appuie sur la recherche du comportement le plus probable du véhicule le long d'un trajet considéré, essentiellement en termes de vitesse.

Avantageusement, l'étape d'estimation des probabilités de transition, s'effectue à partir de l'historique de roulage du véhicule le long du trajet considéré, et donc à partir des vitesses enregistrées le long dudit trajet. Autrement dit, on observe le nombre de fois où le véhicule a varié d'une vitesse donnée à une autre vitesse donnée, sur un segment donné du trajet, et on divise ce nombre par le nombre total d'enregistrements de variations de vitesse sur ledit segment, pour obtenir une probabilité de transition sur ledit segment. L'enregistrement des vitesses peut s'effectuer par l'intermédiaire d'une unité centrale de calcul.

De façon préférentielle, ledit procédé de gestion se déroule de proche en proche pour chaque segment du trajet, et commence à partir du dernier segment pour remonter progressivement vers le premier segment dudit trajet. Il s'agit d'une spécificité d'un procédé selon l'invention.

De façon avantageuse, le procédé peut être relancé à chaque noeud du trajet, pour tenir compte de l'état de charge réel de la batterie au noeud considéré. En effet, le procédé de gestion selon l'invention, peut être lancé au point de départ du trajet, afin que le calculateur sélectionne les segments du trajet le long desquels le moteur d'appoint sera activé, en vue de limiter la consommation en carburant dudit moteur d'appoint, ledit procédé prenant en considération l'état de charge réel de la batterie audit point de départ. Dans un souci de rigueur, ledit procédé peut à nouveau être réactivé à n'importe quel noeud du trajet, pour tenir compte de l'état de charge réel de la batterie au noeud considéré, cette relance du procédé permettant de gommer d'éventuelles petites divergences observées entre le scénario le plus probable déterminé par le calculateur au début du trajet, et le comportement réel du véhicule sur la première partie dudit trajet pour atteindre ledit noeud.

Selon un premier mode de réalisation préféré d'un procédé selon l'invention, l'étape de découpage du trajet en segments, est réalisée automatiquement au moyen d'un navigateur usuel. Ce découpage est automatique et ne tient pas forcément compte de certaines singularités du trajet, pour lesquelles la vitesse du véhicule risque de varier avec une grande amplitude et de façon répétée.

Selon un deuxième mode de réalisation préféré d'un procédé selon l'invention, l'étape de découpage du trajet en segments est réalisée manuellement. Cette méthode manuelle, qui est certes plus longue que la méthode automatique, présente l'avantage de pouvoir découper plus finement les zones du trajet dans lesquelles le véhicule est susceptible de modifier souvent et avec une grande amplitude, sa vitesse. Ce découpage plus fin de certaines zones stratégiques du trajet, va contribuer à accroître la précision de la prévision du comportement routier le plus probable du véhicule le long du trajet.

Préférentiellement, la détermination des probabilités de transition lors de l'étape de calcul peut être affinée en prenant en compte au moins un paramètre à choisir parmi l'heure de la journée, l'état du trafic automobile, le type de route et le nombre de voies. En effet, dans un souci de coller au plus près de la réalité, et dans le but de déterminer un scénario de transition de vitesses le long du trajet qui soit le plus réaliste possible, plusieurs paramètres influents peuvent être pris en compte dans le calcul des probabilités. En effet, les probabilités de transition d'une vitesse à une autre ne seront pas les mêmes aux heures de pointe ou aux heures creuses. De même, un accident produit sur la route, ou des travaux de voirie peut modifier le calcul des probabilités. Le procédé selon l'invention, peut intégrer tout type de paramètres influents aptes à modifier les conditions de circulation le long du trajet considéré, de façon à accroître la précision du calcul des probabilités de transition.

Avantageusement, le procédé de gestion selon l'invention, prend en considération les événements suivants :
- Le moteur thermique doit être arrêté lorsqu'il ne débite pas de puissance,
- Il est nécessaire de respecter un intervalle de temps de quelques minutes entre chaque arrêt et chaque allumage dudit moteur thermique,
- Entre le moment où le moteur thermique est allumé et le moment où il est actif et débite une puissance, il existe un temps de latence de quelques minutes.

La prise en compte de ces événements, permet de se placer dans des conditions les plus proches possibles de celles du fonctionnement réel du véhicule électrique. Aucun paramètre influent au niveau du résultat proposé par le procédé selon l'invention, ne doit être négligé sous peine d'obtenir une loi de gestion de la consommation de carburant biaisée. En effet, il est inutile de déterminer avec précision, au moyen de lois sophistiquées, les probabilités de transition de vitesse sur chaque segment du trajet, si d'autres paramètres influents sont par ailleurs négligés.

Les procédés de gestion selon l'invention, présentent l'avantage de se fonder sur une simulation des plus réalistes, des variations de vitesse d'un véhicule le long d'un trajet donné, afin de prévoir les zones dudit trajet dans lesquelles le moteur d'appoint doit être utilisé dans le but de minimiser la consommation en carburant dudit véhicule. Ils ont de plus l'avantage de proposer une gestion de la consommation d'énergie qui est fiable et précise, en minimisant les aléas qui pourraient venir modifier le comportement du véhicule le long du parcours.

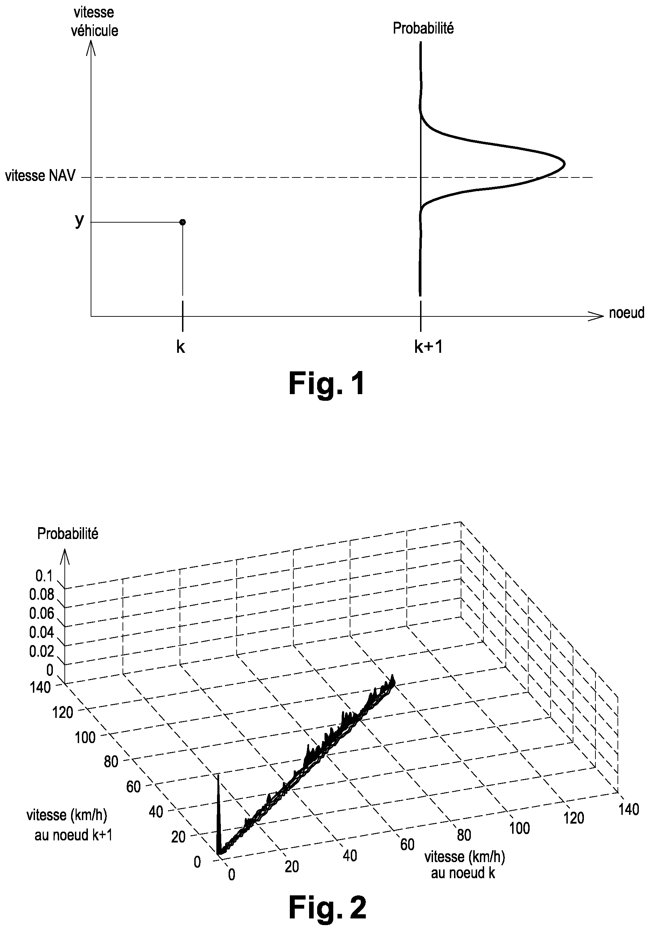

On donne ci-après, un mode de réalisation préféré d'un procédé de gestion selon l'invention, en se référant aux figures 1 et 2.
- La figure 1 est un diagramme illustrant un exemple d'une transition de vitesse entre le noeud d'entrée d'un segment et le noeud de sortie, la vitesse de sortie étant donnée avec une certaine probabilité.
- La figure 2 est un diagramme donnant la probabilité d'une transition de vitesse entre un noeud d'entrée et un noeud de sortie d'un segment, ledit diagramme étant élaboré en considérant une pluralité de vitesses au noeud d'entrée et une pluralité de vitesses au noeud de sortie.

Pour la description détaillée d'un mode de réalisation préféré d'un procédé de gestion de la consommation d'énergie selon l'invention, il est supposé que le véhicule est doté d'un système de navigation de type GPS. L'invention a pour objet un procédé de gestion de la consommation d'énergie pour un véhicule automobile doté d'une batterie électrique et d'un moteur thermique fonctionnant avec un carburant, ledit procédé permettant de sélectionner les phases d'utilisation du moteur le long d'un trajet donné, de manière à minimiser la consommation de carburant dudit véhicule. Autrement dit, le véhicule automobile comprend un moteur électrique, qui est principalement alimenté en courant électrique par la batterie, ledit véhicule comportant également un moteur thermique fonctionnant avec du carburant et venant temporairement suppléer la batterie lors de certaines phases de roulage du véhicule sur un trajet donné.

Un tel procédé comporte les étapes suivantes:
- une étape de découpage en plusieurs segments du réseau routier pris en considération pour un trajet donné, chaque segment étant délimité par un noeud d'entrée et un noeud de sortie. Le trajet est ainsi divisé en portions unitaires, se retrouvant en continuité les unes des autres pour définir un parcours, chacune desdites portions unitaires se caractérisant par un noeud d'entrée et un noeud de sortie. Ce découpage, qui est opéré automatiquement par le navigateur, va permettre au procédé selon l'invention, de se dérouler de proche en proche, en considérant chaque segment individuellement les uns à la suite des autres, afin d'augmenter la précision sur la stratégie d'utilisation du moteur d'appoint. Il est plus facile de prévoir les changements de vitesse du véhicule sur un segment de longueur limitée, plutôt que sur un tronçon étendu du trajet, où les événements aléatoires sont plus nombreux et risqueraient ne de pas être correctement pris en compte. Ce découpage est rendu nécessaire pour rendre l'approche du procédé selon l'invention la plus réaliste possible, et donc la plus fiable possible.
- une étape de calcul de la probabilité d'une transition de vitesse entre une vitesse à un noeud d'entrée et une vitesse à un noeud de sortie d'un segment, à partir d'une vitesse associée audit segment, et en considérant plusieurs vitesses au noeud d'entrée et plusieurs vitesses au noeud de sortie, ladite étape étant réalisée de proche en proche pour tous les segments du trajet. Sur chaque segment, le système de navigation fournit plusieurs caractéristiques, telles que par exemple sa longueur, sa pente, la vitesse maximale autorisée, la vitesse moyenne attendue et son rayon de courbure. En vertu de ces informations, la vitesse du véhicule est connue au noeud d'entrée d'un segment. L'objectif de cette étape du procédé, est d'estimer la vitesse du véhicule au noeud de sortie du segment avec une certaine probabilité, l'opération se répétant tout le long du trajet pour chaque segment. Les probabilités de transition sont estimées relativement aux informations données par le système de navigation. La figure 1 illustre un exemple de cette loi de probabilité pour une vitesse réelle y du véhicule à un noeud d'entrée k d'un segment, et une vitesse réglementaire *NAV donnée* par le système de navigation. Sur l'exemple du diagramme de la figure 1, il est ainsi très probable que la vitesse du véhicule au noeud de sortie k+1 du segment considéré, soit supérieure à la vitesse *NAV donnée* par le système de navigation. Toujours à titre d'exemple, le système de navigation peut suggérer six vitesses *NAV différentes :* 20, 40, 60, 80, 100, 120 Km/h. En se référant à la figure 2, une matrice de transition est alors estimée à partir de ces valeurs de vitesse données par le système de navigation, cette matrice correspondant aux probabilités qu'un véhicule ayant, au noeud d'entrée, une vitesse comprise entre 0 et 150Km/h, se retrouve au noeud de sortie avec une vitesse comprise entre 0 et 150 Km/h. Il est supposé que dans le cadre d'un procédé de gestion selon l'invention, toutes les valeurs possibles de la vitesse au noeud d'entrée sont balayées, ainsi, que toutes les valeurs possibles de la vitesse au noeud de sortie. Cette matrice de transition peut être calculée par plusieurs méthodes. La méthode la plus usuelle consiste à utiliser un historique de roulage où on enregistre les vitesses du véhicule à chaque noeud. Ensuite, on compte le nombre de transitions pour chaque couple de vitesse, entre 0 et 150Km/h, et on divise ce nombre par le nombre total de transitions.
- une étape d'application d'un algorithme d'optimisation stochastique prenant en compte tous les scénarios possibles de transition entre chaque noeud d'entrée et chaque noeud de sortie, et leur probabilité associée, ainsi qu'un modèle de consommation de carburant entre deux noeuds successifs, et qui est fonction de la vitesse du véhicule entre deux noeuds successifs et de l'état de charge de la batterie. L'algorithme utilisé intègre également le fait que le moteur d'appoint ne doit pas être allumé ou arrêté trop fréquemment, et qu'il faut attendre un temps donné de quelques minutes entre la prise de décision « allumage du moteur d'appoint» et son utilisation effective. Ces contraintes supplémentaires sont intégrées dans l'étape d'application de l'algorithme d'optimisation stochastique, afin de se rapprocher le plus possible des situations réelles susceptibles d'être rencontrées le long du trajet.
- une étape de sélection des phases d'utilisation du moteur thermique le long du trajet.

Le déroulement du procédé selon l'invention, suppose que le conducteur entre une destination dans le système de navigation et qu'il suive le trajet indiqué par ledit système. Il est également supposé que la réserve énergétique de la batterie et du moteur d'appoint est suffisante pour que le conducteur puisse atteindre sa destination.

Les résultats fournis par un procédé de gestion de la consommation énergétique selon l'invention, dépendent de la qualité des données de roulage utilisées pour l'estimation des probabilités de transition effectuée lors de la deuxième étape du procédé selon l'invention.

## Revendications

1. Procédé de gestion de la consommation d'énergie pour un véhicule automobile doté d'une batterie électrique et d'un moteur thermique, ledit procédé permettant de sélectionner les phases d'utilisation dudit moteur le long d'un trajet donné, de manière à minimiser la consommation de carburant dudit véhicule, **caractérisé en ce qu'**il comprend les étapes suivantes :
- une étape de découpage en plusieurs segments du réseau routier pris en considération pour un trajet donné, chaque segment étant délimité par un noeud d'entrée et un noeud de sortie,
- une étape de calcul de la probabilité d'une transition de vitesse entre une vitesse à un noeud d'entrée et une vitesse à un noeud de sortie d'un segment, à partir d'une vitesse associée au segment, et en considérant plusieurs vitesses au noeud d'entrée et plusieurs vitesses au noeud de sortie, ladite étape étant réalisée de proche en proche sur tous les segments du trajet,
- une étape d'application d'un algorithme d'optimisation stochastique prenant en compte des scénarios possibles de transition entre chaque noeud d'entrée et chaque noeud de sortie le long du trajet, et leur probabilité associée, ainsi qu'un modèle de consommation de carburant entre deux noeuds successifs, et qui est fonction de la vitesse dudit véhicule entre lesdits noeuds et de l'état de charge de la batterie,
- une étape de sélection des phases d'utilisation du moteur thermique le long du trajet.

2. Procédé selon la revendication 1, **caractérisé en ce que** l'étape d'estimation des probabilités de transition, s'effectue à partir de l'historique de roulage du véhicule le long du trajet considéré, et donc à partir des vitesses enregistrées le long dudit trajet.

3. Procédé selon l'une quelconque des revendications 1 ou 2, **caractérisé en ce que** ledit procédé se déroule de proche en proche pour chaque segment du trajet, et **en ce qu'**il commence à partir du dernier segment pour remonter progressivement vers le premier segment dudit trajet.

4. Procédé selon l'une quelconque des revendications 1 à 3, **caractérisé en ce qu'**il peut être relancé à chaque noeud du trajet, pour tenir compte de l'état de charge réel de la batterie au noeud considéré.

5. Procédé selon l'une quelconque des revendications 1 à 4, **caractérisé en ce que** l'étape de découpage du trajet en segments, est réalisée automatiquement au moyen d'un navigateur usuel.

6. Procédé selon l'une quelconque des revendications 1 à 4, **caractérisé en ce que** l'étape de découpage du trajet en segments est réalisée manuellement.

7. Procédé selon l'une quelconque des revendications 1 à 6, **caractérisé en ce que** la détermination des probabilités de transition lors de l'étape de calcul peut être affinée en prenant en compte au moins un paramètre à choisir parmi l'heure de la journée, l'état du trafic automobile, le type de route et le nombre de voies.

8. Procédé selon l'une quelconque des revendications 1 à 7, **caractérisé en ce qu'**il prend en considération les événements suivants :
- Le moteur thermique doit être arrêté lorsqu'il ne débite pas de puissance,
- Il est nécessaire de respecter un intervalle de temps de quelques minutes entre chaque arrêt et chaque allumage dudit moteur thermique,
- Entre le moment où le moteur thermique est allumé et le moment où il est actif et débite une puissance, il existe un temps de latence de quelques minutes.

## Patentansprüche

1. Verfahren zur Verwaltung des Energieverbrauchs für ein Kraftfahrzeug, das mit einer elektrischen Batterie und mit einem Wärmekraftmotor ausgestattet ist, wobei das Verfahren es ermöglicht, die Nutzungsphasen des Motors entlang einer gegebenen Strecke so auszuwählen, dass der Kraftstoffverbrauch des Fahrzeugs minimiert wird, **dadurch gekennzeichnet, dass** es die folgenden Schritte enthält:
- einen Schritt des Aufteilens des für eine gegebene Strecke in Betracht gezogenen Straßennetzes in mehrere Segmente, wobei jedes Segment von einem Eingangsknoten und einem Ausgangsknoten begrenzt wird,
- einen Schritt des Berechnens der Wahrscheinlichkeit eines Geschwindigkeitsübergangs zwischen einer Geschwindigkeit an einem Eingangsknoten und einer Geschwindigkeit an einem Ausgangsknoten eines Segments ausgehend von einer dem Segment zugeordneten Geschwindigkeit, und indem mehrere Geschwindigkeiten am Eingangsknoten und mehrere Geschwindigkeiten am Ausgangsknoten in Betracht gezogen werden, wobei der Schritt nach und nach auf allen Segmenten der Strecke durchgeführt wird,
- einen Schritt der Anwendung eines stochastischen Optimierungsalgorithmus unter Berücksichtigung möglicher Übergangsszenarien zwischen jedem Eingangsknoten und jedem Ausgangsknoten entlang der Strecke und ihrer zugeordneten Wahrscheinlichkeit, sowie eines Kraftstoffverbrauchsmodells zwischen zwei aufeinanderfolgenden Knoten, und das von der Geschwindigkeit des Fahrzeugs zwischen den Knoten und dem Ladezustand der Batterie abhängt,
- einen Schritt der Auswahl der Nutzungsphasen des Wärmekraftmotors entlang der Strecke.

2. Verfahren nach Anspruch 1, **dadurch gekennzeichnet, dass** der Schritt der Schätzung der Übergangswahrscheinlichkeiten ausgehend vom Fahrverlauf des Fahrzeugs entlang der betrachteten Strecke und somit ausgehend von den Geschwindigkeiten ausgeführt wird, die entlang der Strecke gespeichert werden.

3. Verfahren nach einem der Ansprüche 1 oder 2, **dadurch gekennzeichnet, dass** das Verfahren nach und nach für jedes Segment der Strecke abläuft, und dass es ausgehend vom letzten Segment beginnt, um progressiv zum ersten Segment der Strecke zurückzugehen.

4. Verfahren nach einem der Ansprüche 1 bis 3, **dadurch gekennzeichnet, dass** es an jedem Punkt der Strecke neu gestartet werden kann, um den realen Ladezustand der Batterie am betrachteten Knoten zu berücksichtigen.

5. Verfahren nach einem der Ansprüche 1 bis 4, **dadurch gekennzeichnet, dass** der Schritt des Aufteilens der Strecke in Segmente automatisch mittels eines üblichen Navigators durchgeführt wird.

6. Verfahren nach einem der Ansprüche 1 bis 4, **dadurch gekennzeichnet, dass** der Schritt des Aufteilens der Strecke in Segmente manuell durchgeführt wird.

7. Verfahren nach einem der Ansprüche 1 bis 6, **dadurch gekennzeichnet, dass** die Bestimmung der Übergangswahrscheinlichkeiten im Rechenschritt verfeinert werden kann, indem mindestens ein Parameter berücksichtigt wird, der unter der Tageszeit, dem Zustand des Automobilverkehrs, der Straßentyp und die Anzahl von Fahrspuren auszuwählen ist.

8. Verfahren nach einem der Ansprüche 1 bis 7, **dadurch gekennzeichnet, dass** es die folgenden Ereignisse berücksichtigt:
- der Wärmekraftmotor muss abgeschaltet werden, wenn er keine Leistung abgibt,
- es ist notwendig, ein Zeitintervall von einigen Minuten zwischen jedem Abschalten und jedem Zünden des Wärmekraftmotors zu beachten,
- zwischen dem Moment, in dem der Wärmekraftmotor gezündet wird, und dem Moment, in dem er aktiv ist und eine Leistung abgibt, gibt es eine Latenzzeit von einigen Minuten.

## Claims

1. Method for managing energy consumption for an automotive vehicle fitted with an electric battery and with an engine, said method making it possible to select the phases of use of said engine along a given route, so as to minimize the fuel consumption of said vehicle, **characterized in that** it comprises the following steps:
- a step of cutting the road network taken into consideration for a given route into several segments, each segment being delimited by an entry node and an exit node,
- a step of computing the probability of a speed transition between a speed at an entry node and a speed at an exit node of a segment, on the basis of a speed associated with the segment, and by considering several speeds at the entry node and several speeds at the exit node, said step being carried out gradually on all the segments of the route,
- a step of applying a stochastic optimization algorithm taking into account possible scenarios of transition between each entry node and each exit node along the route, and their associated probability, as well as a model of fuel consumption between two successive nodes, and which is dependent on the speed of said vehicle between said nodes and on the state of charge of the battery,
- a step of selecting the phases of use of the engine along the route.

2. Method according to Claim 1, **characterized in that** the step of estimating the transition probabilities is performed on the basis of the vehicle's travel history along the route considered, and therefore on the basis of the speeds recorded along said route.

3. Method according to either of Claims 1 and 2, **characterized in that** said method proceeds gradually for each segment of the route, and **in that** it begins from the last segment and tracks progressively toward the first segment of said route.

4. Method according to any one of Claims 1 to 3, **characterized in that** it can be recommenced at each node of the route, to take account of the actual state of charge of the battery at the node considered.

5. Method according to any one of Claims 1 to 4, **characterized in that** the step of cutting the route into segments is carried out automatically by means of a standard navigator.

6. Method according to any one of Claims 1 to 4, **characterized in that** the step of cutting the route into segments is carried out manually.

7. Method according to any one of Claims 1 to 6, **characterized in that** the determination of the transition probabilities during the computation step can be refined by taking into account at least one parameter to be chosen from among the time of day, the state of the automobile traffic, the type of road and the number of lanes.

8. Method according to any one of Claims 1 to 7, **characterized in that** it takes into consideration the following events:
- The engine must be stopped when it does not yield any power,
- It is necessary to comply with a time interval of a few minutes between each stoppage and each switch-on of said engine,
- Between the moment at which the engine is switched on and the moment at which it is active and yields power, there exists a latency time of a few minutes.
